# EUROPEAN PATENT APPLICATION

(11) **EP 2 786 846 A1**
(43) Date of publication of application: **08.10.2014**
(21) Application number: 13162448.8
(22) Date of filing: 05.04.2013
(51) Int. Cl.: B26D 1/38, B26D 3/00, B29B 9/04

(54) **Method and apparatus for cutting expanded plastic foam materials**

(71) Applicant: Acoustic Group OY, 02650 Espoo (FI)
(72) Inventor: Pääkkönen, Toivo, 87100 Kajaani (FI)
(74) Representative: Seppo Laine Oy

(57) **Abstract**

Apparatus and method for cutting cross linked expanded polyethylene plastic into shaped pieces comprises at least two blades (5, 9) and means for feeding a sheet of plastic (2) to be cut by the blades (5, 9). The blades (5, 9) have each a cutting edge with teeth (5) that can be set complementarily pass each other so that the points of the teeth (5) pass each other in a way that the cutting edges intermesh noncontactigly. The blades (5, 9) are moved, for example by rotating, in relation to each other so that the points of the teeth (5) pass each other in a way that the cutting edges intermesh noncontactigly.

## Description

### Technical Field

The present invention concerns a method and apparatus for cutting materials that are difficult to cut to form pieces.

Especially the invention concerns cutting cross linked expanded polyethylene plastic rapidly into shaped pieces.

### Background

Cross linked polyethylene materials have many uses as they are structurally strong to be used for pipelines and other mechanically strained structures. They can be expanded in order to obtain a lightweight foam-like material that is light and still strong. Expanded polyethylene is widely used as heat insulation material as well as seals and tapes, for example. One field of use for expanded polyethylene is in manufacturing of acoustic panels. One method for manufacturing of such panels is described in WO 2012/095562. In this method the cross linked expanded close cell polyethylene is cut in pieces and processed together with some solid materials in order to obtain an acoustic panel.

In the production of the above mentioned acoustic material or panel a large amount of particulate expanded plastic material is needed. The expanded plastics are produces in rolls or mats and therefore have to be cut in suitable pieces before they are used in the production. The material properties of these plastics cause some difficulties in cutting process. For example, cross linked expanded close cell polyethylene has very high strength, high compressibility, high flexibility and good resistance for shear and tear. A sheet having a thickness of about 10 mm may be compressed during cutting to a thickness of a copy paper without being able sever a piece. As the material also stretches a lot without tearing, the material flows easily from under the cutting blades and if accurately formed pieces are needed, the material has to be held tightly in place.

These materials have been cut lengthwise with disk cutters similar to those that are called slitter-winders in paper industry. These cutters have several parallel opposing disks that press a sheet of material between the disks and cut the material to strips that resemble tagliatelle. The compressibility and stretchability of expanded plastic material causes problems in cutting since the material tends to escape from under the blades and the blades have to be set accurately. However, a maybe greater drawback is that the cut strips of material are very difficult to handle making cutting them crosswise to smaller pieces difficult.

### Summary of Invention

Making large amounts of pieces of expanded plastic like cross linked closed cell polyethylene has proved difficult. This makes use of such materials difficult in industrial scale.

For the above reasons, it would be beneficial to provide a cutting method and apparatus that could facilitate cutting expanded cross linked closed cell polyethylene and materials having similar properties.

One embodiment of the invention provides a simple mechanical apparatus for producing large amounts of expanded plastic pieces and particles.

The invention is based on cutting pieces of material from a sheet of expanded plastic by using at least two blades that move in relation to each other and have each a cutting edge with teeth that can be set complementarily pass each other so that he points of the teeth pass each other in a way that the cutting edges intermesh noncontactigly.

According to one embodiment, at least one of the blades is stationary and at least one blade is mobile.

According to one further embodiment, at least one moving blade is mounted on a rotatable axle.

According to one embodiment of the invention, teeth of the blades are rectangular.

According to one embodiment of the invention, teeth of the blades are rounded.

According to one embodiment of the invention, the at least one stationary blade is mounted on an edge of a feeding table used for feeding the material that is cut.

Various embodiments and combinations thereof provide essential benefits.

The main benefit of the invention is the possibility to produce pieces of expanded plastic material in large quantities and with low costs. The production rate of the apparatus can be adjusted to production requirements simply by changing the rotational speed of a blade axle or by building a wider machine. Thickness of the material that is cut can vary without any essential need for adjustments. The mechanical structure of the apparatus is simple. Thus the cost of the apparatus is low and need of maintenance in minimum. For these reasons cost of cutting the material can be kept low.

Other objects and features of the invention will become apparent from the following detailed description considered in conjunction with the accompanying drawing. It is to be understood, however, that the drawing are intended solely for purposes of illustration and not as a definition of the limits of the invention, for which reference should be made to the appended claims.

### Description of Drawings

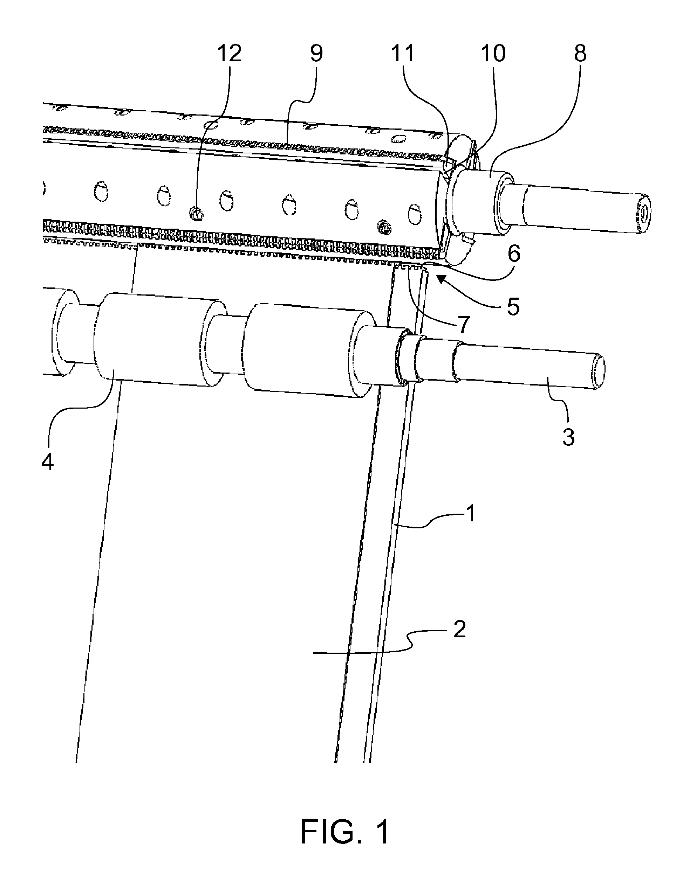

Fig. 1 shows a partial view of one embodiment of the apparatus according to the invention.

### Description of embodiments

The invention concerns a method and apparatus for cutting form pieces of expanded plastic from semifabricated plastic materials such as plates, boards, sheets or bars. Expanded plastic is defined as plastic that comprises small cavities enclosed totally or partially by walls throughout the material. Typically the proportion of plastic material of the volume of the expanded plastic is less than 10% in pressureless environment. Pieces of such plastic are well suitable for raw material for acoustic panels or sheets.

Figure 1 shows a simplified, partial view of one embodiment of the invention. The figure shows only the operational parts of the apparatus and parts such as frame and drives have been omitted for the sake of clarity.

In the following, the material that is being cut is referred as plastic material. The material is preferably cross linked expanded polyethylene plastic.

The apparatus comprises a feed table 1 for guiding a sheet of plastic material 2. The plastic material 2 is fed as a sheet from a roll or other commercially available form by suitable feeding apparatus. At the end of the feeding table is a stationary blade 5. This blade 5 may be integral part of the feed table 1 or a replaceable blade. At the vicinity of the stationary blade 5 is a feed axle 3 that has a set of press rolls 4. The feed axle 3 is arranged on the top of the feed table so that the plastic material 2 can be fed between the feed table 1 and the press rolls 4. As the feed table 1can be wider than the plastic material sheet 2 that is cut, the feed axle should comprise enough press rolls 4 to hold and guide all plastic material sheets 2 that are simultaneously cut. The width of the feed table depends on the cutting capacity of the apparatus and should be chosen accordingly.

The teething of the stationary blade 5 is made of rectangular teeth 6 and similarly rectangular recesses 7 between the teeth 6. The dimensioning of the teeth 6 and recesses is preferably chosen so that each recess could accommodate a tooth so that the tooth 6 would fill the recess 7 closely but would not touch the edges of the recess 7. Reason for this is that then a similarly cut blade is complementary to the stationary blade and can be made to run against the stationary blade so that the teeth 6 and recesses 7 match each other. In the embodiment of the figure 1 blades complementary to the stationary blade 5 are mounted on a rotatable axle 8 that is placed in the vicinity of the end of the feed table 1. The stationary blade 5 and blades 9 mounted on rotatable axle 8 are arranged to intermesh complementarily so that teeth 6 of the blades 5, 9 pass through the recesses 7 of opposing blade 5, 9 in a comb like manner. The blades 9 mounted on the axle 8 are mobile by the rotation of the axle 8.

In this embodiment, the rotatable axle comprises four detachable blades 9 arranged symmetrically around the central axis of the axle 8. Each blade 9 is placed in a recess 10 cut in each quadrant of the rotatable axle 8 and attached to the axle 8 by a locking bar 11 that is fastened to the axle 8 by bolts 12 running through the surface of the rotatable axle 8 and the blade 9.

In operation, when the rotatable axle 8 is in motion, mobile blades 9 of the axle 8 move rapidly and the teeth of the mobile blades 9 pass through the recesses 7 of the stationary blade 6 and vice versa. The plastic sheet 2 is passed over the feed table 1 into the jaws of the blades, where each overlapping teeth and recess cut a piece from the sheet. The overlapping or intermeshing teeth and recesses make a clear cut even on a sheet made of cross linked expanded polyethylene plastic. The rotational movement of the mobile blades 9 draws the sheet 2 to be cut forward. In order to facilitate this, the mobile blades 9 can be set on a slight angle in relation to the central axis of the rotatable axle 8. Feed axle 3 and press rolls may be rotated in order to guarantee positive feeding of the plastic sheet or as an auxiliary feeding means.

The embodiment described above can be modified in several ways. It can be contemplated, that the mobile blade or blades are operated by a linear reciprocal movement past one or more stationary blades. This could be accomplished by a pneumatic or hydraulic drive means. However, this might be more complicated to implement than a simple rotatable axle. The form of the teeth of the blades can be chosen freely according to what kind and size of pieces of plastic are needed. Even a continuous curve as a cutting edge can contemplated, but a rectangular of any shape having sharp angular edges might provide most reliable separation in both lengthwise and crosswise direction of the plastic sheet. It is also possible to arrange several feed tables radially around on rotatable axle, but building more individual apparatuses might be more feasible. The number of the mobile blades can be varied.

Thus, while there have been shown and described and pointed out fundamental novel features of the invention as applied to a preferred embodiment thereof, it will be understood that various omissions and substitutions and changes in the form and details of the method and device may be made by those skilled in the art without departing from the spirit of the invention. For example, it is expressly intended that all combinations of those elements and/or method steps which perform substantially the same results are within the scope of the invention. Substitutions of the elements from one described embodiment to another are also fully intended and contemplated. It is also to be understood that the drawings are not necessarily drawn to scale but they are merely conceptual in nature. It is the intention, therefore, to be limited only as indicated by the scope of the claims appended hereto.

**Reference signs list**

| | |
|---|---|
| 1 | feed table |
| 2 | plastic sheet |
| 3 | feed axle |
| 4 | pressure roll |
| 5 | stationary blade |
| 6 | tooth |
| 7 | recess |
| 8 | rotatable axle |
| 9 | mobile blade |
| 10 | recess in axle |
| 11 | locking bar |
| 12 | bolt |

### Citation list

WO 2012/095562

## Claims

1. Method for cutting cross linked expanded polyethylene plastic into shaped pieces, wherein the pieces of material are cut from a from a sheet of plastic (2) by using at least two blades (5, 9), **characterized by**
- moving the at least two blades in relation to each other, and
- setting the blades (5, 9)having a cutting edge that comprises teeth (6) and recesses (7) between teeth (6) to pass each other complementarily so that he points of the teeth (5) of the blades pass each other in a way that the cutting edges of the blades (5, 9)intermesh noncontactigly.

2. Method according to the claim 1, **characterized by** keeping at least one of the blades (5) stationary and moving at least one of the blades (9).

3. Method according to the claim 1 or 2 , **characterized by** moving at least one moving blade (9) by a rotatable axle (8).

4. Apparatus for cutting cross linked expanded polyethylene plastic into shaped pieces, the apparatus comprising at least two blades (5, 9) and means for feeding a sheet of plastic (2) to be cut by the blades (5, 9) **characterized by**
- the at least two blades (5, 9) have each a cutting edge with teeth (5) that can be set complementarily pass each other so that the points of the teeth (5) pass each other in a way that the cutting edges intermesh noncontactigly, and
- means for moving the at least two blades (5, 9) in relation to each other so that the points of the teeth (5) pass each other in a way that the cutting edges intermesh noncontactigly.

5. Apparatus according to claim 4, **characterized in that** the at least one of the blades (5) is stationary and at least one blade (9) is mobile.

6. Apparatus according to claim 4 or 5, **characterized in that** the at least one moving blade (9) is mounted on a rotatable axle (8).

7. Apparatus according to one of the claims 4 - 6, **characterized in that** the teeth (6) of the blades (5, 9) are rectangular.

8. Apparatus according to one of the claims 4 - 6, **characterized in that** teeth of the blades are rounded.

9. Apparatus according to one of the claim 5 - 8, **characterized in that** the at least one stationary blade (5) is mounted on an edge of a feeding table (1) used for feeding the material (2) that is cut.
